# EUROPÄISCHE PATENTSCHRIFT

(11) **EP 0 756 972 B1**
(45) Veröffentlichungstag und Bekanntmachung des Hinweises auf die Patenterteilung: **24.10.2001**
(21) Anmeldenummer: 96111937.7
(22) Anmeldetag: 24.07.1996
(51) Int. Cl.: B60R 21/20, B60R 13/00

(54) **Gassack-Abdeckung für ein Fahrzeuginsassen-Rückhaltesystem**
Air bag cover for a vehicle occupant restraint system
Couvercle de sac gonflable pour un système de retenue d'un occupant de véhicule

(30) Priorität: 03.08.1995 DE 29512551 U
(43) Veröffentlichungstag der Anmeldung: 05.02.1997
(73) Patentinhaber: TRW Occupant Restraint Systems GmbH & Co. KG, 73551 Alfdorf (DE)
(72) Erfinder: Blumenschein, Oliver, 73614 Schorndorf (DE); Nusshör, Bernd, 73565 Spraitbach (DE); Fischer, Anton, 73572 Heuchlingen (DE)
(74) Vertreter: Sulzbach, Werner, Dipl.-Chem. Dr.

(56) Entgegenhaltungen:
- DE-U- 9 402 922
- DATABASE WPI Section Ch, Week 8605 Derwent Publications Ltd., London, GB; Class A14, AN 86-031377 XP002052851 & JP 60 250 984 A (NIPPON PLAST KK) , 11.Dezember 1985

## Beschreibung

Die Erfindung betrifft eine Gassack-Abdeckung für ein Fahrzeuginsassen-Rückhaltesystem, die mit dem Emblem eines Fahrzeugherstellers versehen ist.

Gassack-Abdeckungen für Fahrzeuginsassen-Rückhaltesysteme werden üblicherweise als Kunststoffteile im Spritzgußverfahren hergestellt. Zur Befestigung der Embleme von Fahrzeugherstellern an den Abdeckungen werden normalerweise Metall-Plaketten verwendet, die an der Deckelplatte einer solchen Abdeckung mittels eingestanzter Blechfahnen oder Laschen befestigt und auf der Rückseite der Deckelplatte umgebogen werden. Des weiteren sind Plaketten bekannt, die mittels einer Schraubverbindung oder durch Vernieten an der Abdeckung befestigt werden können. Das Emblem ist dabei üblicherweise auf eine Metallfolie aufgedruckt, die mit der Plakette verklebt ist.

Die Herstellung dieser Metallembleme ist teuer. Außerdem besteht bei derartigen Plaketten immer die Gefahr des Bruchs der Verbindung zwischen dem Metallemblem und der Abdeckung bzw. zwischen der Metallfolie und der Plakette.

Die JP 60250984 A beschreibt ein Lenkrad mit einen gattungsgemäßen (Hupen-)Abdeckung, die eine aus einem weichen Kunststoff gebildete Oberfläche aufweist. Auf dieser Oberfläche ist mit Hilfe eines Siebdruckverfahrens beispielsweise ein Emblem aufgedruckt.

Die DE 9402922 U1 offenbart eine Gassack-Abdeckung für ein Rückhaltesystem in Fahrzeugen mit einer Deckelplatte, an der eine mit einem Emblem versehene Plakette befestigt ist. Die Befestigung erfolgt mittels eines an der Plakette angeformten Hohlniets, der die Deckelplatte durchdringt und der auf der Rückseite der Deckelplatte umgebördelt ist.

Gemäß der Erfindung wird eine mit einem Emblem versehene Gassack-Abdeckung für ein Fahrzeuginsassen-Rückhaltesystem bereitgestellt, die erhältlich ist durch direktes Bedrucken einer vorbestimmten Fläche der Abdeckung aus Kunststoff mit Druckfarbe, wobei die vorbestimmte Fläche mit einer oder mehreren Druckfarben bedruckt und anschließend eine metallisierende Prägefolie aufgeprägt ist.

Das Bedrucken der vorbestimmten Fläche kann mit Hilfe des bekannten Siebdruckverfahrens oder jedem anderen zum Bedrucken von Kunststoffen geeigneten Druckverfahren erfolgen. Bei einfarbigem Design kann der Kunststoff im Bereich der vorbestimmten Fläche auch direkt eingefärbt sein. Anschließend wird vorzugsweise durch Heißprägen eine metallisierende Prägefolie auf die vorbestimmte Fläche der Abdeckung aufgeprägt. Mit Hilfe des Heißprägens können vor allem metallisch wirkende Flächen, Konturlinien, etc., soweit diese nicht durch ein Druckverfahren herstellbar sind, erzeugt werden.

Vor dem Bedrucken wird die vorbestimmte Fläche bevorzugt mit einem Grundierungsmittel behandelt, um eine ausreichende Haftung der Druckfarben auf der Kunststoffoberfläche der Abdeckung zu gewährleisten. Besonders bevorzugt ist die vorbestimmte Fläche ein integraler Bestandteil der Abdeckung.

Gemäß einer weiteren Ausführungsform der vorliegenden Erfindung ist die vorbestimmte Fläche der Abdeckung ein aus einem Kunststoffspritzteil gebildeter Emblemträger, der an seiner der Abdeckung zugewandten Rückseite wenigstens ein Befestigungselement zur Befestigung des Emblemträgers an der Abdeckung aufweist. In vorteilhafter Weise wird das Befestigungselement durch eine entsprechende Öffnung in der Abdeckung geführt und mit dieser in bekannter Weise, beispielsweise durch Verschrauben, verbunden. Vor der Befestigung des Emblemträgers an der Abdeckung wird dessen Vorderseite direkt mit einer oder mehreren Druckfarben bedruckt und/oder eine Prägefolie aufgeprägt. Die Verwendung des aus einem Kunststoffspritzteil gebildeten Emblemträgers ermöglicht auch eine direkte Einfärbung des Kunststoffs bzw. eine aufeinanderfolgende Behandlung mit verschiedenen Druckfarben und das anschließende Aufprägen von metallisch wirkenden Flächen oder Linien.

Die Erfindung betrifft außerdem ein Verfahren nach Auspruch 5 zur Herstellung der vorgenannten Gassack-Abdeckungen.

Die vorliegende Erfindung stellt somit eine einteilige Emblembefestigung bereit. Dadurch wird die Gefahr des Ablösens von Teilen der Emblembefestigung, beispielsweise durch Lösen der Verbindung zwischen einer Metall-Plakette und der Deckelplatte der Abdeckung bzw. der Metallfolie und ihrem Träger, vermieden. Bei der erfindungsgemäßen Abdeckung führt ein Nachlassen der Qualität der Farbe und des Druckes über die Lebensdauer des Kraftfahrzeugs hinweg im Falle eines Unfalls nicht zu einer Gefährdung der Fahrzeuginsassen, da die Masse der Farbe vernachlässigt werden kann und daher beim Aufsprengen der Abdeckung infolge der Entfaltung des Gassacks nicht als fliegendes Bauteil zu betrachten ist. Die erfindungsgemäße Emblembefestigung ermöglicht darüber hinaus als Kunststoffbauteil eine Herstellung zu niedrigen Preisen bei hoher Präzision. Ferner entfällt die bisher notwendige Galvanisierung von Metallteilen.

Die Erfindung wird nachfolgend unter Bezugnahme auf die Zeichnung näher erläutert. In der Zeichnung zeigt:

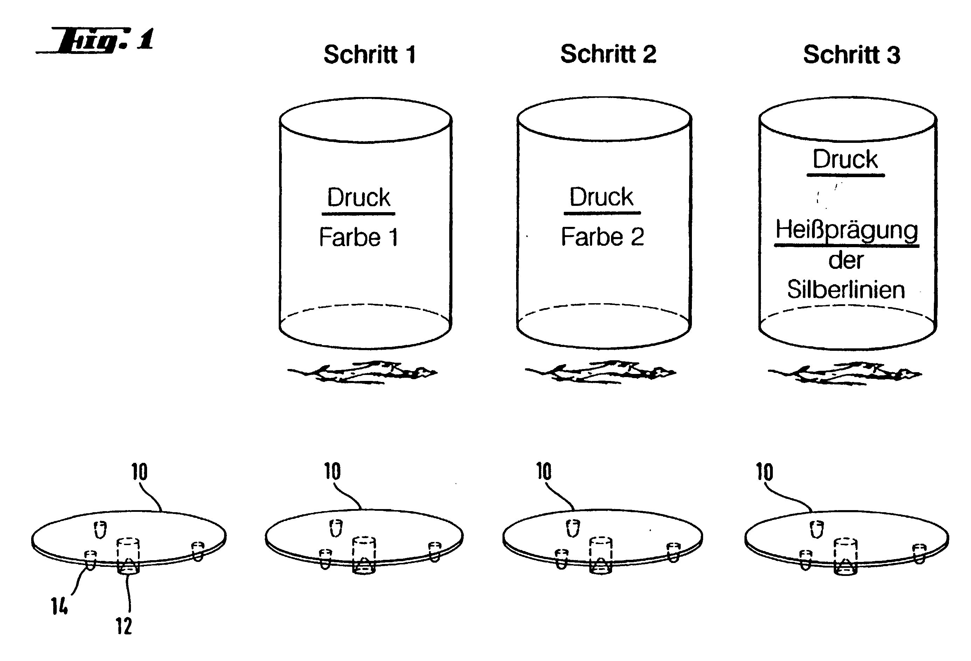

- Figur 1: eine schematische Darstellung von Verfahrensschritten, nach denen eine Ausführungsform der erfindungsgemäßen Abdeckung erhältlich ist.

Gemäß Fig. 1 wird zunächst ein aus einem Kunststoffspritzteil gebildeter Emblemträger 10 bereitgestellt, der einen an seiner Rückseite angeformten Befestigungsstift 12 sowie mehrere angeformte Zapfen 14 aufweist. Die Vorderseite des Emblemträgers 10 ist vorzugsweise mit einem Grundierungsmittel vorbehandelt. Die Form des Emblemträgers ist beliebig und entspricht vorzugsweise der Grundfläche des Fahrzeugherstelleremblems.

In einem ersten Schritt wird nun in einer Druckmaschine die Farbe 1, vorzugsweise die Grundfarbe des Herstelleremblems, auf die grundierte Vorderseite des Emblemträgers 10 aufgedruckt. Das Bedrucken erfolgt mit Hilfe von bekannten Druckverfahren, beispielsweise durch Siebdruck. In einem zweiten Schritt wird eine von der Farbe 1 verschiedene Farbe 2 aufgedruckt und dadurch ein vorgegebenes Bildmuster erzeugt. Dieser zweite Schritt wird gegebenenfalls mit verschiedenen Druckfarben wiederholt, bis das gewünschte Emblem fertiggestellt ist. Silberlinien oder andere metallisch wirkende Flächen und Linien werden in einem dritten Schritt durch Aufprägen einer metallisierenden Prägefolie auf die Vorderseite des Emblemträgers 10 erzeugt. Schritt 2 kann entfallen, falls das Emblem des Fahrzeugherstellers nur aus einer Grundfarbe und einem metallisch wirkenden Schriftzug besteht.

Nachdem der Emblemträger 10 so mit dem Emblem des Fahrzeugherstellers versehen wurde, wird zur Befestigung des Emblemträgers 10 an der Gassack-Abdeckung der Befestigungsstift 12 durch eine entsprechende Öffnung in der Abdeckung bzw. ihrer Deckelplatte geführt und an der Abdeckung in herkömmlicher Weise befestigt. Die Zapfen 14 greifen dabei in entsprechende Vertiefungen in der Abdeckung ein und verhindern ein Verrutschen des Emblems.

In Abwandlung der vorstehend beschriebenen Ausführungsform kann die zum Bedrucken vorbestimmte Fläche der Abdeckung auch integraler Bestandteil der Abdeckung bzw. der Deckelplatte der Abdeckung sein. In diesem Fall wird bei der Herstellung der Abdeckung im Kunststoffspritzgußverfahren oder mittels anderer bekannter Formverfahren eine zum späteren Bedrucken vorbestimmte Fläche vorbereitet. Diese Fläche kann beispielsweise von einer reliefartig hervorgehobenen oder eingeprägten Linie begrenzt sein. Nach dem Grundieren der Fläche wird die Abdeckung bzw. deren Deckelplatte direkt, in gleicher Weise wie vorstehend für den Emblemträger 10 beschrieben, in einer Druckmaschine bedruckt.

Eine nach dem letztgenannten Verfahren erhältliche Gassack-Abdeckung für ein Fahrzeuginsassen-Rückhaltesystem bietet ein erhöhtes Maß an Sicherheit, da keine separaten Teile zur Befestigung des Emblems verwendet werden. Gleichzeitig entfallen die Herstellungskosten für zusätzliche bedruckte Metallteile.

## Patentansprüche

1. Gassack-Abdeckung für ein Fahrzeuginsassen-Rückhaltesystem, die mit einem Emblem versehen ist, erhältlich durch direktes Bedrucken einer vorbestimmten Fläche der Abdeckung aus Kunststoff mit Druckfarbe, **dadurch gekennzeichnet, daß** die vorbestimmte Fläche mit einer oder mehreren Druckfarben bedruckt und anschließend eine metallisierende Prägefolie aufgeprägt ist.

2. Abdeckung nach Anspruch 1, **dadurch gekennzeichnet, daß** die vorbestimmte Fläche der Abdeckung vor dem Bedrucken grundiert ist.

3. Abdeckung nach Anspruch 1 oder 2, **dadurch gekennzeichnet, daß** die vorbestimmte Fläche integraler Bestandteil der Abdeckung ist.

4. Abdeckung nach Anspruch 1 oder 2, **dadurch gekennzeichnet, daß** die vorbestimmte Fläche der Abdeckung die Vorderseite eines aus Kunststoff gebildeten Emblemträgers (10) ist, der mittels eines an seiner der Abdeckung zugewandeten Rückseite angeordneten Befestigungselements (12) an der Abdeckung befestigt ist.

5. Verfahren zur Herstellung einer mit einem Emblem versehenen Gassack-Abdeckung für ein Fahrzeuginsassen-Rückhaltesystem, wobei die Abdeckung eine vorbestimmte Fläche aus Kunststoff zum direkten Bedrucken mit Druckfarbe aufweist, **dadurch gekennzeichnet, daß** die vorbestimmte Fläche mit einer oder mehreren Druckfarben bedruckt und anschließend eine metallisierende Prägefolie aufgeprägt wird.

6. Verfahren nach Anspruch 5, **dadurch gekennzeichnet, daß** die vorbestimmte Fläche die Vorderseite eines aus einem Kunststoffspritzteil gebildeten Emblemträgers (10) ist, wobei das Verfahren die folgenden Schritte umfaßt:
- Bereitstellen des Emblemträgers (10);
- Bedrucken der Vorderseite des Emblemträgers (10) mit einer oder mehreren Druckfarben;
- Aufprägen einer metallisierenden Prägefolie auf die bedruckte Vorderseite des Emblemträgers (10);
- Befestigen des Emblemträgers (10) an der Gassackabdeckung.

## Claims

1. A gas bag cover for a vehicle occupant restraint system, provided with an emblem, obtainable by direct printing on a predetermined surface of the cover made of plastics with a printing ink, **characterized in that** the predetermined surface is printed with one or more printing inks and a metallizing embossed sheet is subsequently stamped on.

2. The cover according to claim 1, **characterized in that** the predetermined surface of the cover is primed before printing.

3. The cover according to claim 1 or 2, **characterized in that** the predetermined surface forms an integral part of the cover.

4. The cover according to claim 1 or 2, **characterized in that** the predetermined surface of the cover is the front face of an emblem carrier (10) formed from plastics and secured to the cover by means of an attachment element (12) disposed on its rear face facing the cover.

5. A method for producing a gas bag cover for a vehicle occupant restraint system and provided with an emblem, the cover having a predetermined surface of plastics for being directly printed with a printing ink, **characterized in that** the predetermined surface is printed with one or more printing inks and a metallizing embossed sheet is subsequently stamped on.

6. The method according to claim 5, **characterized in that** the predetermined surface is the front face of an emblem carrier (10) formed from an injectionmolded plastics part, the method comprising the following steps:
- providing the emblem carrier (10);
- printing the front face of the emblem carrier (10) with one or more printing inks;
- stamping a metallizing embossed sheet on the printed front face of the emblem carrier (10);
- securing the emblem carrier (10) to the gas bag cover

## Revendications

1. Couvercle de coussin à gaz pour un système de retenue des occupants d'un véhicule, qui est pourvu d'un emblème que l'on peut obtenir par impression directe d'une surface prédéterminée du couvercle en matière plastique avec une encre d'imprimerie, **caractérisé en ce que** la surface prédéterminée est imprimée avec une ou plusieurs encres d'imprimerie, et une feuille d'estampage métallisée est ensuite estampée.

2. Couvercle selon la revendication 1, **caractérisé en ce qu'**une couche de fond est appliquée sur la surface prédéterminée du couvercle avant l'impression.

3. Couvercle selon la revendication 1 ou 2, **caractérisé en ce que** la surface prédéterminée fait partie intégrante du couvercle.

4. Couvercle selon la revendication 1 ou 2, **caractérisé en ce que** la surface prédéterminée du couvercle est la face antérieure d'un support d'emblème (10) réalisé en matière plastique, qui est fixé au couvercle au moyen d'un élément de fixation (12) agencé sur sa face postérieure tournée vers le couvercle.

5. Procédé de fabrication d'un couvercle de coussin à gaz pourvu d'un emblème pour un système de retenue des occupants d'un véhicule, le couvercle présentant une surface prédéterminée en matière plastique destinée à être imprimée directement avec une encre d'imprimerie, **caractérisé en ce que** la surface prédéterminée est imprimée avec une ou plusieurs encres et une feuille d'estampage métallisée est ensuite estampée.

6. Procédé selon la revendication 5, **caractérisé en ce que** la surface prédéterminée est la face antérieure d'un support d'emblème (10) réalisée à partir d'une pièce de matière plastique moulée par injection, le procédé comprenant les étapes suivantes consistant à :
- fournir un support d'emblème (10);
- imprimer la face antérieure du support d'emblème (10) avec une ou plusieurs encres d'imprimerie ;
- estamper une feuille d'estampage métallisée sur la face antérieure imprimée du support d'emblème (10) ;
- fixer le support d'emblème (10) sur le couvercle de coussin à gaz.
